# EUROPEAN PATENT APPLICATION

(11) **EP 1 947 852 A2**
(43) Date of publication of application: **23.07.2008**
(21) Application number: 08008577.2
(22) Date of filing: 01.03.2000
(51) Int. Cl.: H04N 7/14, H04M 1/725

(54) **Radio mobile terminal with a mountable and removable camera**

(30) Priority: 01.03.1999 JP 5267299
(62) Divisional of application: 00103476.8
(71) Applicant: Kabushiki Kaisha Toshiba, Minato-ku Tokyo (JP)
(72) Inventor: The designation of the inventor has not yet been filed
(74) Representative: HOFFMANN EITLE

(57) **Abstract**

A radio mobile terminal is provided with a transmitter/receiver (17, 3) for communicating data including voices and images with a destination terminal. A camera (11) captures image data to be transmitted to the destination terminal via the transmitter/receiver (17, 3). A display (10) displays image data received from the destination terminal via the transmitter/receiver (17, 3). A connection unit (21) allows the camera (11) to be mounted or detached depending on whether image data needs to be transmitted to the destination terminal.

## Description

The present invention relates to a radio mobile terminal.

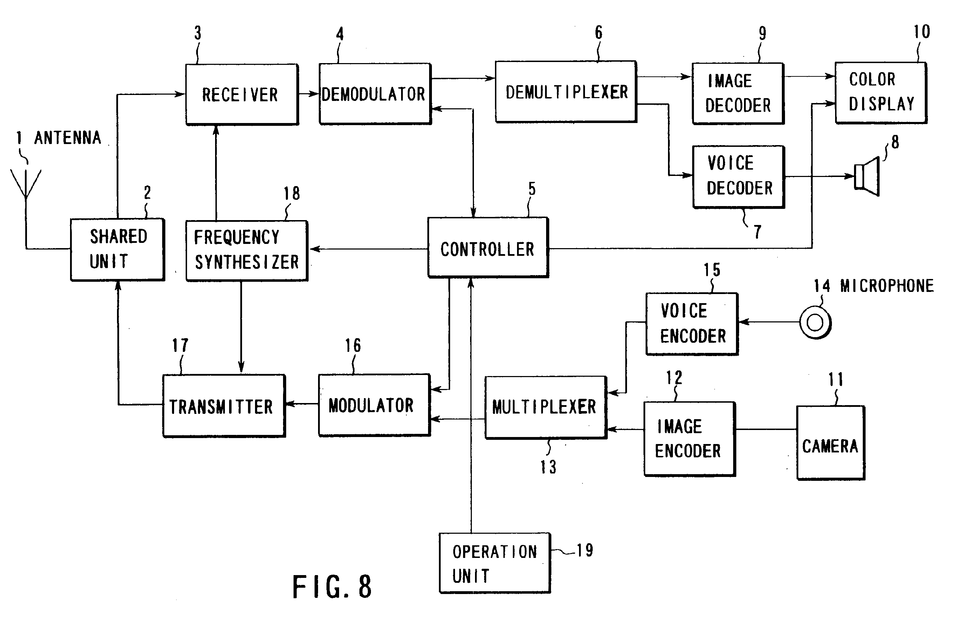

Available radio mobile terminals include a radio mobile videophone terminal that can send and receive motion pictures as well as voices by attaching a camera to a commercially available mobile telephone. This type of videophone terminals employs a configuration as shown in FIG. 8 for communicating data including voices and images with a remote terminal via a base station.

In FIG. 8, a high-frequency signal received at an antenna 1 is supplied to a receiver 3 via a shared unit 2. The supplied signal is frequency-converted to a low-frequency signal (baseband signal) based on a local oscillation signal from a frequency synthesizer 18, and then is demodulated in a demodulator 4. The demodulated signal is transferred to a controller 5 that reads a control signal therefrom. The demodulated signal is also supplied to a demultiplexer 6. The multiplexed signal is separated into a voice signal and an image signal.

A voice signal is decoded in a voice decoder 7 and is output from a speaker 8 as a voice. An image signal is decoded in an image decoder 9 and is displayed on an color display 10 functioning as a display unit.

A camera 11 captures a subject to generate an image signal. The generated image signal is encoded in an image encoder 12, and then is supplied to a multiplexer 13. A voice signal entered from a microphone 14 is encoded in a voice encoder 15, and then is supplied to a multiplexer 13. The multiplexer 13 multiplexes encoded image and voice signals. A multiplexed signal is modulated in a modulator 16, and then is sent to a base station via a transmitter 17, the shared unit 2, and the antenna 1. The frequency synthesizer 18 generates frequencies needed for radio communication. An operation unit 19 is used for various key operations.

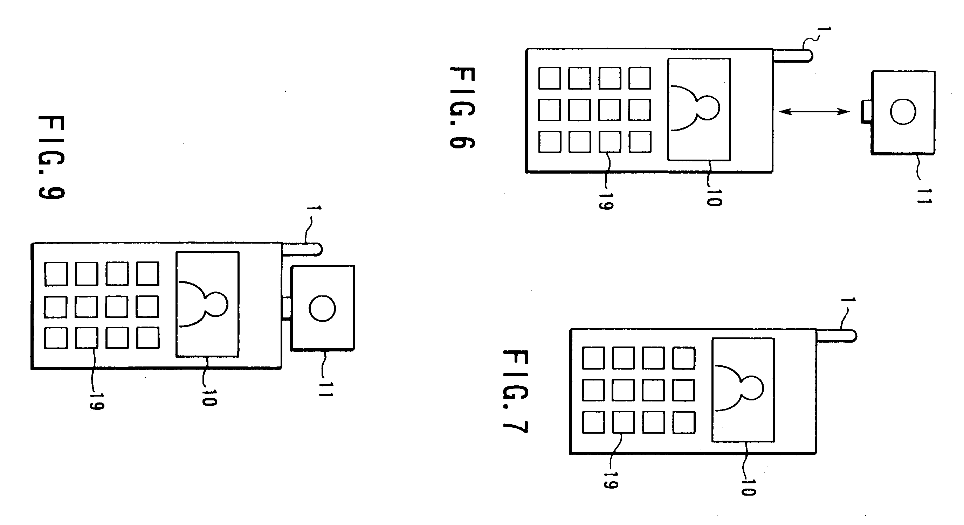

FIG. 9 shows an outline of the above-mentioned videophone terminal. Its body is provided with the color display 10 and the operation unit 19. The upper part of the body is provided with the antenna 1 and the camera 11.

A great majority of mobile telephone users owns a small apparatus capable of voice and e-mail communication. Contrastedly, a videophone terminal uses a relatively large camera for providing videophone capabilities. For example, a videophone terminal equipped with a camera as shown in FIG. 9 has a volume of approximately 200 ml. Contrary to an ordinary mobile telephone, there has a problem of inconvenience that such an apparatus is too large and heavy to carry say in a pocket of user's clothes during an out-of-service state of the apparatus. In addition, the camera's movable parts may be damaged.

The object of the present invention is to provide a radio mobile terminal that is conveniently transportable during an out-of-service state and can be easily used as a videophone during operation.

To attain this object, the first aspect of the present invention is a radio mobile terminal capable of communicating data including voices and images with a destination terminal comprising:
a transmitter/receiver;
a camera that captures image data to be sent to the destination terminal via the transmitter/receiver;
a display that can display image data received from the destination terminal via the transmitter/ receiver; and
a connection unit that allows the camera to be mounted or detached depending on whether image data needs to be transmitted to the destination terminal.

The second aspect of the present invention is a radio mobile terminal capable of communicating data including voices and images with a destination terminal comprising:
a storage unit that stores image data in a format suitable for transmission to the destination terminal;
a detector that detects an operating state of the camera when image data is transmitted to the destination terminal; and
a transmitter that transmits image data stored in the storage unit to the destination terminal when the detector unit detects that the camera is inactive.

The third aspect of the present invention is a radio mobile terminal capable of communicating data including voices and images with a destination terminal comprising:
a transmitter/receiver;
a storage unit that stores image data in a format suitable for transmission to the destination terminal;
a display that can display image data received from the destination terminal via the transmitter/ receiver; and
an image data transmitter that transmits image data stored in the storage unit via the transmitter/ receiver for videophone communication with the destination terminal.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a configuration of a radio mobile terminal according to the first embodiment of the present invention.
FIG. 2 is an operation flowchart for outgoing and incoming calls according to the first embodiment of the present invention.
FIG. 3 is a block diagram showing a configuration of a radio mobile terminal according to the second embodiment of the present invention.
FIG. 4 is an operation flowchart for outgoing and incoming calls according to the second embodiment of the present invention.
FIG. 5 is a block diagram showing a configuration of a radio mobile terminal according to the third embodiment of the present invention.
FIG. 6 is an external view (part 1 of 2) of a radio mobile terminal according to the third embodiment, showing that the camera can be mounted or detached.
FIG. 7 is an external view (part 2 of 2) of a radio mobile terminal according to the third embodiment, showing that no camera is provided.
FIG. 8 is a block diagram that shows a configuration of a conventional radio mobile terminal.
FIG. 9 is an external view of a conventional radio mobile terminal.

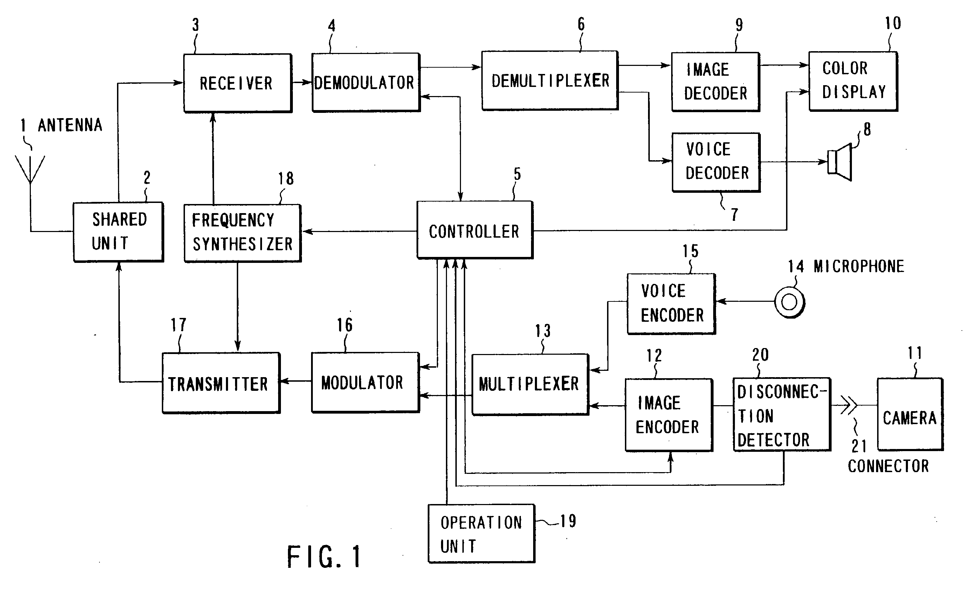

Embodiments of the present invention will be described in detail, with reference to the accompanying drawings. FIG. 1 is a block diagram showing a configuration of a radio mobile videophone terminal (simply called a radio mobile terminal hereafter) according to the first embodiment of the present invention. Same components in FIGS. 1 and 8 are assigned same numbers. Different components are chiefly described here. In FIG. 1, a camera 11 for this embodiment can be mounted and detached via a connector 21 as a connection unit. A disconnection detector 20 detects whether the camera 11 is detached or mounted, and then issues a detection signal to a controller 5. FIG. 6 shows the camera 11 can be freely detached or mounted on the radio mobile terminal.

When reading a detection signal indicating that the camera 11 is detached, the controller 5 operates assuming that the camera 11 is not mounted. When reading a detection signal indicating that the camera 11 is mounted, the controller operates assuming that the camera 11 is mounted.

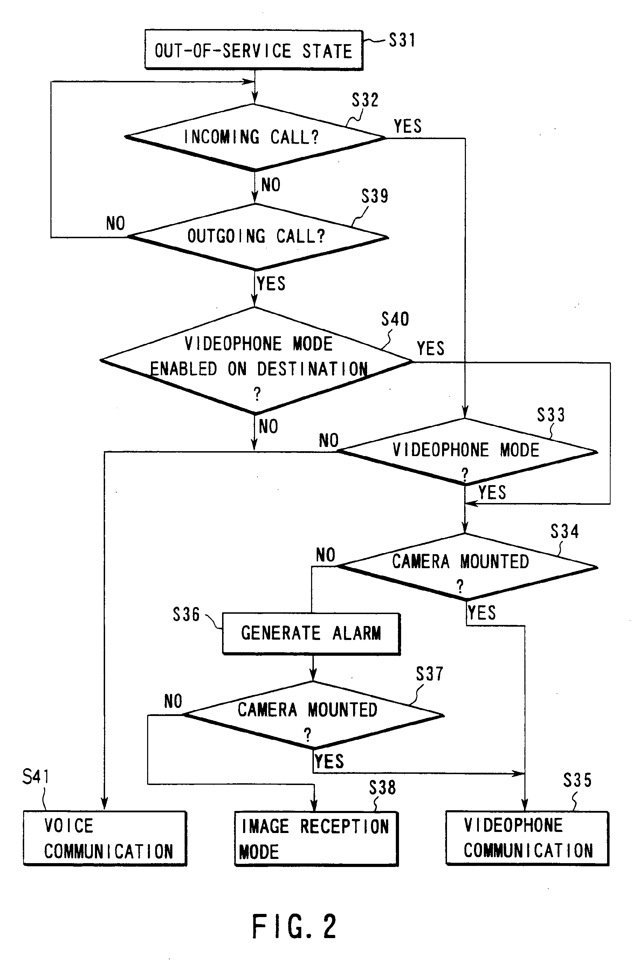

FIG. 2 is an operation flowchart for outgoing and incoming calls according to the first embodiment of the present invention. While in an out-of-service state (step S31), the controller 5 checks if there is an incoming call from a destination terminal (step S32). When step S32 results in YES, the controller 5 uses the received signal to determine if the call has terminated in a videophone mode (step S33). When step S33 results in YES, the controller checks if the camera 11 is mounted according to a signal from the disconnection detector 20 (step S34). When step S34 results in YES, the videophone mode takes effect immediately, enabling videophone communication (step S35). When step S34 results in NO, control is passed to step S36 to generate an alarm and enter a wait state for a specified time. After this wait time, the controller rechecks if the camera 11 is mounted according to a signal from the disconnection detector 20 (step S37). When step S37 results in YES, control is passed to step 35 to enable the videophone mode. When step S37 results in NO, the controller enters an image reception mode (step S38) that just receives video images from the destination terminal for communication.

When step S33 results in NO, the controller proceeds to step S41 to enter a voice mode.

When step S32 results in NO, the controller proceeds to step 39 to check if an outgoing call is generated. When step S39 results in NO, control returns to step S32. When step S39 results in YES to indicate call origination, the controller 5 checks if the destination terminal enters the videophone mode according to a signal from a base station (step S40). When step 40 results in YES, the controller follows the same procedure thereafter as for the call termination depending on whether the camera 11 is mounted (step S34). When step S40 results in NO, control is passed to step S41 to enable the voice mode.

As mentioned above, this embodiment allows the camera 11 to be mounted or detached. The camera can be detached for improved portability when it is not needed. When an incoming call is received from the destination terminal, the radio mobile terminal checks if the videophone mode takes effect. When the videophone mode takes effect, it is possible to select whether to perform videophone communication with the camera 11 mounted or to just receive images from the destination depending on needs. When a call is to be originated from the own radio mobile terminal, it is possible to first check if the destination terminal is in the videophone mode. Only when the destination terminal is in the videophone mode, videophone communication is available with the own camera 11 mounted.

Accordingly, the above-mentioned first embodiment can provide a radio mobile terminal that is conveniently transported during an out-of-service state and is easily operated as a videophone when needed.

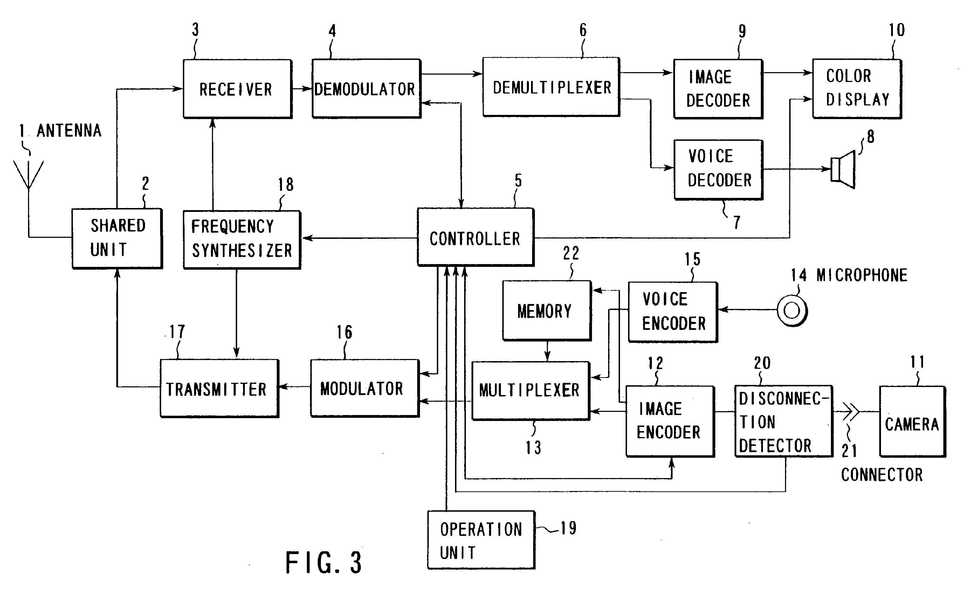

FIG. 3 is a block diagram showing a configuration of a radio mobile terminal according to the second embodiment of the present invention. Compared to the configuration in FIG. 1, memory 22 as an image storage is added to FIG. 3. This embodiment uses a connector 21 to import image data captured by the camera 11 during an out-of-service state. The imported image data is encoded in a image encoder 12 and is stored as self-portrait data in the memory 22.

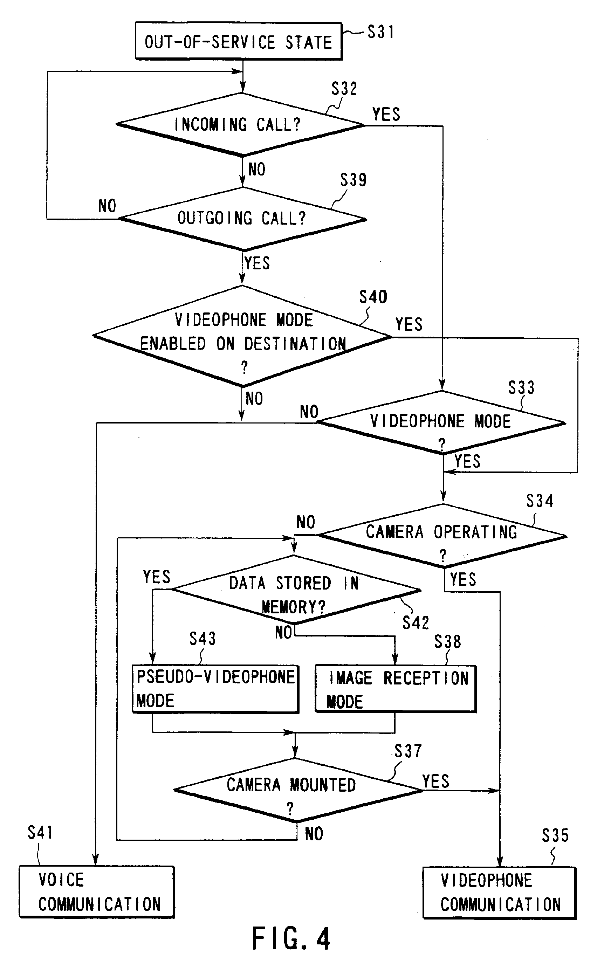

FIG. 4 is an operation flowchart for outgoing and incoming calls according to the second embodiment of the present invention. Same flowchart steps in FIGS. 2 and 4 are assigned same step numbers. In this embodiment, an incoming call is confirmed at step S32 for example. Under this condition, when the videophone mode is confirmed at step S33, the controller 5 checks if the camera 11 is active at next step S34. Inactive states of the camera 11 include cases where the camera 11 is not mounted or where the camera 11 is mounted but does not operate. When step S34 results in NO, the controller proceeds to step S42 to check if self-portrait data is stored in the memory 22. When step S42 results in YES, the controller transfers the encoded self-portrait data to a multiplexer 13 to enable a pseudo-videophone mode (step S43). Data in the memory 22 can be any character instead of a self-portrait.

In this case, although the realtime image data is sent from the destination terminal and displayed at the color display 10, the self-portrait data which is sent to the destination terminal is the one which is stored in advance in the memory 22, rather than the realtime image (in this case, voice data is sent to the destination terminal realtime).

When step S42 results in NO, there is no image data to send, automatically causing the image reception mode (step S38). After step S43 or S38, the controller rechecks if the camera 11 is mounted (step S37). When step S37 results in YES, the videophone mode is enabled. When step S37 results in NO, the voice mode is enabled.

In the above-mentioned second embodiment, image data stored in the memory 22 is transmitted when the camera 11 is not mounted, or is mounted but does not operate in the videophone mode. It is possible to provide pseudo-videophone communication without transmitting a realtime image. This embodiment provides such an advantage that a user can set to the terminal whether the stored image data should be sent or not instead of a realtime image, prior to or during the communication. In addition, this embodiment includes effects of the first embodiment such as improved portability during an out-of-service state and easy operability as a videophone on demand. Since image data is stored in an encoded format, a required amount of memory can be decreased. This provides an advantage of eliminating a need to encode images at the time of videophone communication.

As a variant example of the second embodiment, it is possible to decrease an amount of memory required just by storing image data for a short time (say approximately 10 seconds) in the memory 22. By repeating this operation, a user can send entire data to the destination terminal.

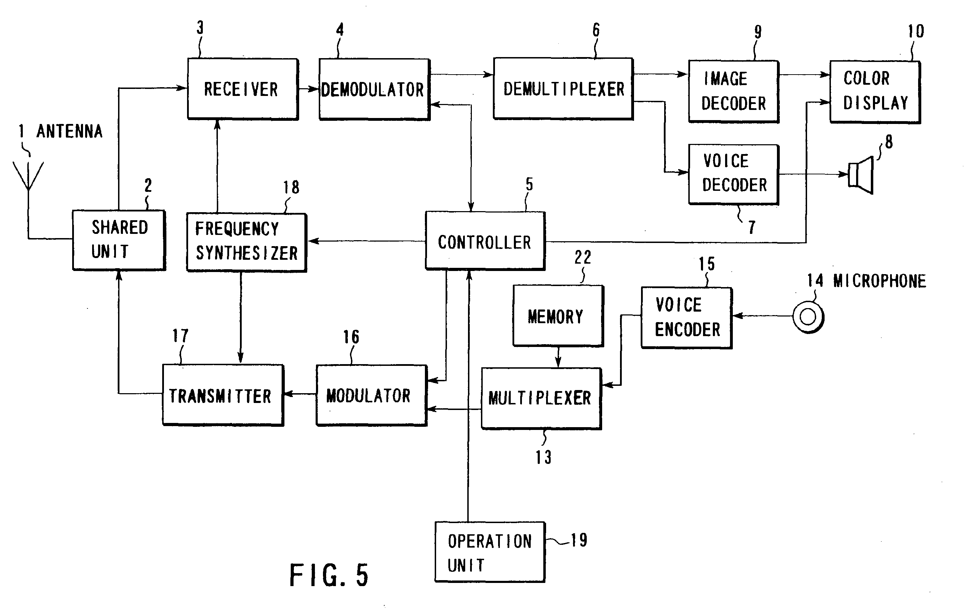

FIG. 5 is a block diagram showing a configuration of a radio mobile terminal according to the third embodiment of the present invention. The configuration in FIG. 5 is void of the image encoder 12, the disconnection detector 20, the connector 21, and the camera 11 in the configuration for the second embodiment in FIG. 3. The configuration in FIG. 5 has no camera as shown in FIG. 7.

In this embodiment, self-portrait data captured by say a digital camera is encoded on a personal computer. The encoded data is imported into the radio mobile terminal and is stored in the memory 22. It is also possible to use the memory 22 for storing image data transmitted from a networked server connected to a base station or from other radio mobile terminals. Pseudo-videophone communication with the destination terminal is available by sending image data stored in the memory 22.

In addition to effects of the second embodiment, the third embodiment eliminates the camera and necessary components such as the image encoder 12, the disconnection detector 20, and the connector 21. The radio mobile terminal can be more compact and lightweight. Another advantage is more improved operability because a user need not mount or detach the camera.

For the second and third embodiments, it is possible to provide a voice transmission mode and a voice reception mode. The voice transmission mode allows the radio mobile terminal to transmit voice data to the destination terminal. The voice reception mode allows the radio mobile terminal to receive voice data from the destination terminal. In the voice transmission mode, the radio mobile terminal can send to the destination terminal an image indicating that she or he is speaking. In the voice reception mode, the radio mobile terminal can send to the destination terminal an image indicating that she or he is not speaking. This can eliminate unnaturalness during videophone communication.

The specification contains the following numbered clauses.
1. A radio mobile terminal capable of communicating data including voices and images with a destination terminal comprising:
   a transmitter/receiver (17, 3);
   a camera (11) that captures image data to be sent to the destination terminal via the transmitter/ receiver (17, 3);
   a display (10) that can display image data received from the destination terminal via the transmitter/receiver (17, 3); and
   a connection unit (21) that allows the camera to be mounted or detached depending on whether image data needs to be transmitted to the destination terminal.
2. A radio mobile terminal according to clause 1, characterized by further comprising:
   a first decision unit (5) that checks if a videophone mode takes effect when an incoming call is received from the destination terminal; and
   a second decision unit (20) that checks if the camera (11) is mounted,
   wherein the radio mobile terminal provides voice communication services when not in the videophone mode, generates an alarm when the camera (11) is not mounted in the videophone mode, or provides videophone communication services when the camera (11) is mounted in the videophone mode.
3. A radio mobile terminal according to clause 2, characterized in that the second decision unit (20) rechecks if the camera (11) is mounted after a specified elapse of time from the alarm, and the radio mobile terminal provides videophone communication services when the camera (11) is mounted, or receives images when the camera (11) is not mounted.
4. A radio mobile terminal according to clause 1, characterized by further comprising:
   a first decision unit (5) that checks if the destination terminal is in the videophone mode when a call is made to the destination terminal; and
   a second decision unit (20) that checks if the camera (11) is mounted,
   wherein the radio mobile terminal provides voice communication services when the destination terminal is not in the videophone mode, provides videophone communication services when the destination terminal is in the videophone mode and the camera (11) is mounted, or generates an alarm when the destination terminal is in the videophone mode and the camera (11) is not mounted.
5. A radio mobile terminal according to clause 4, characterized in that the second decision unit (20) rechecks if the camera (11) is mounted after a specified elapse of time from the alarm, and the radio mobile terminal provides videophone communication services when the camera (11) is mounted, or receives images when the camera (11) is not mounted.
6. A radio mobile terminal according to clause 2, characterized in that the radio mobile terminal provides the voice communication services in a voice transmission mode that transmits voice data to the destination terminal and in a voice reception mode that receives voice data from the destination terminal, and wherein first image data indicating that she or he is speaking is transmitted to the destination terminal in the voice transmission mode, and second image data indicating that she or he is not speaking is transmitted to the destination terminal in the voice reception mode.
7. A radio mobile terminal capable of communicating data including voices and images with a destination terminal comprising:
   a storage unit (22) that stores image data in a format suitable for transmission to the destination terminal;
   a detector (5) that detects an operating state of the camera (11) when image data is transmitted to the destination terminal; and
   a transmitter (17) that transmits image data stored in the storage unit (22) to the destination terminal when the detector (5) detects that the camera (11) is inactive.
8. A radio mobile terminal according to clause 7, characterized by further comprising:
   a first decision unit (5) that checks if a videophone mode takes effect when an incoming call is received from the destination terminal; and
   a second decision unit (20) that checks if the camera (11) is active,
   wherein the radio mobile terminal provides voice communication services when not in the videophone mode, provides videophone communication services when the camera (11) is active in the videophone mode, or provides pseudo-videophone communication services by transmitting image data stored in the storage unit (22) to the destination terminal when the camera (11) is inactive in the videophone mode.
9. A radio mobile terminal according to clause 8, characterized in that the radio mobile terminal switches to the videophone communication services from the pseudo-videophone communication services or from the image reception, when the second decision unit (20) detects that the camera (11) is mounted.
10. A radio mobile terminal according to clause 7, characterized by further comprising:
   a first decision unit (5) that checks if the destination terminal is in the videophone mode when a call is made to the destination terminal; and
   a second decision unit (20) that checks if the camera (11) is active,
   wherein the radio mobile terminal provides voice communication services when the destination terminal is not in the videophone mode, provides videophone communication services when the destination terminal is in the videophone mode and the camera (11) is active, or provides pseudo-videophone communication services by transmitting image data stored in the storage unit (22) to the destination terminal when the destination terminal is in the videophone mode and the camera (11) is inactive.
11. A radio mobile terminal according to clause 10, characterized in that the radio mobile terminal switches to the videophone communication services from the pseudo-videophone communication services or from the image reception, when the second decision unit (20) detects that the camera (11) is mounted.
12. A radio mobile terminal according to clause 8, characterized in that the radio mobile terminal provides the voice communication services in a voice transmission mode that transmits voice data to the destination terminal and in a voice reception mode that receives voice data from the destination terminal, and wherein first image data indicating that she or she is speaking is transmitted to the destination terminal in the voice transmission mode, and second image data indicating that she or he is not speaking is transmitted to the destination terminal in the voice reception mode.
13. A radio mobile terminal capable of communicating data including voices and images with a destination terminal comprising:
   a transmitter/receiver (17, 3);
   a storage unit (22) that stores image data in a format suitable for transmission to the destination terminal;
   a display (10) that can display image data received from the destination terminal via the transmitter/receiver (17, 3); and
   an image data transmitter (5) that transmits image data stored in the storage unit (22) via the transmitter/receiver (17, 3) for videophone communication with the destination terminal.
14. A radio mobile terminal according to clause 13, characterized in that the radio mobile terminal provides the voice data communication services in a voice transmission mode that transmits voice data to the destination terminal and in a voice reception mode that receives voice data from the destination terminal, and wherein first image data indicating that she or he is speaking is transmitted to the destination terminal in the voice transmission mode, and second image data indicating that she or he is not speaking is transmitted to the destination terminal in the voice reception mode.

## Claims

1. A radio mobile terminal capable of transmitting an image while communicating with a destination terminal, **characterized by** comprising:
a storage unit that stores image data in a compressed state after acquiring the image data from an external device;
destination terminal mode determination means for determining whether the destination terminal is in a videophone mode or not, if receiving an incoming call from the destination terminal or making a call thereto; and
transmission means for transmitting the image data acquired from the external device and stored in the storage unit to the destination terminal, if the destination terminal mode determination means determines that the destination terminal is in the videophone mode.

2. A radio mobile terminal according to claim 1, **characterized by** further comprising:
a camera unit that acquires image data to be transmitted to the destination terminal; and
operating-state detection means for detecting an operating state of the camera unit;
wherein the transmission means transmits the image data acquired by the external device and stored in the storage unit to the external device, when the destination terminal mode determination means determines that the destination terminal is in the videophone mode; and the operating-state detecting means detects that the camera unit is inoperative.

3. A radio mobile terminal according to claim 1 or 2, **characterized in that** the external device is a server on a network connected to one of a personal computer and a base station.

4. A radio mobile terminal according to claim 1 or 2, **characterized in that** the external device is a radio mobile terminal connected to a base station.

5. A radio mobile terminal according to claim 1 or 2, **characterized in that** the compressed state of the image data is an encoded state of the image data.
